# EUROPEAN PATENT APPLICATION

(11) **EP 1 154 606 A2**
(43) Date of publication of application: **14.11.2001**
(21) Application number: 01111161.4
(22) Date of filing: 10.05.2001
(51) Int. Cl.: H04L 27/227

(54) **Carrier phase recovery techniques**

(30) Priority: 10.05.2000 US 567751
(71) Applicant: TRW Inc., Redondo Beach, California 90278 (US)
(72) Inventor: Core, Mark T., Placentia, CA 92870 (US)
(74) Representative: Schmidt, Steffen J., Dipl.-Ing.

(57) **Abstract**

A phase shifter (20) shifts the phase information of a received signal to form a phase shifted signal defining a corrected phase angle. The shifted signal is processed by Viterbi decoders (36 and 38) and convolutional encoders (40 and 42). The output of the encoders and the phase shifted signals address a phase error read only memory (52) which generates a phase error signal that is used by the phase shifter (20) to reduce the phase error of the received signal.

## Description

### BACKGROUND OF THE INVENTION

This invention relates recovery of phase information in a communication system, and more particularly relates to such recovery in which the phase information represents transmitted symbols.

In order to transmit data with a phase coherent modem, a receiver must be capable of estimating the reference phase of a received signal. Such estimating is generally achieved with a phase lock loop (PLL). The difference between the incoming signal reference phase and the tracking loop phase estimate is a phase error. The component due to the additive white Gaussian noise (AWGN) is called the tracked phase error. A conventional decision directed phase lock loop (DDPLL) is driven with a symbol phase error that is updated with each received symbol. A decision is first made as to which symbol has been received, and the angle between the received symbol decision variable and the nominal symbol position updates the tracking loop.

There are two sources of tracked phase error in a DDPLL. The first is due to the angular fluctuations of the decision variable resulting from the AWGN at the receiver input. The second is due to decision errors that occur when an incorrect nominal symbol is selected. At low signal to noise ratios, decision errors are relatively frequent, and the second type of error can be the dominant factor in overall tracking performance. Reducing the decision error rate would mitigate this effect and improve PLL tracking. This invention addresses the problem of improving PLL tracking and provides a solution.

### BRIEF SUMMARY OF THE INVENTION

The preferred embodiment is useful for improving the reference phase estimate of a received signal representing symbols identified at least in part by corresponding symbol phase angles. In such an environment, the phase information of the received signal is shifted by an amount equal to the value of the reference phase estimate. The shifting during the demodulation process or after demodulation preferably is accomplished by a phase shifter. A decode signal is generated in response to the phase shifted signal which identifies one of the several predetermined symbol nominal phase angles. The decode signal preferably is generated by a decoder. A phase error signal is generated in response to the decode signal and at least the phase shifted signal. The phase error signal has a value related to the difference between the corrected phase angle represented by the phase information and the symbol nominal phase angle. The reference phase estimate is responsive to the phase error signal to alter the phase information of the received signal and thereby reduce the phase error of the phase shifted signal.

By using the foregoing techniques, phase errors in a received signal can be reduced with a degree of accuracy and economy previously unknown.

### BRIEF DESCRIPTION OF THE DRAWINGS

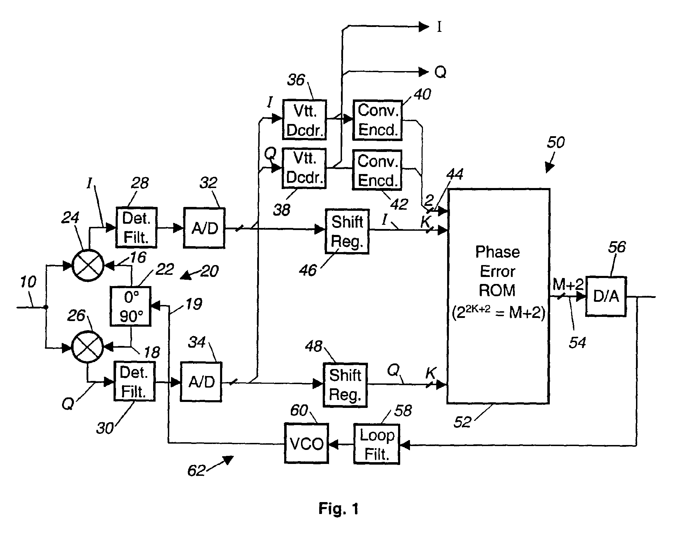

Figure 1 is a schematic block diagram of a preferred form of the present invention.

### DETAILED DESCRIPTION OF THE PREFERRED EMBODIMENTS

Referring to Figure 1, a radio frequency carrier signal with QPSK modulation is received on an input 10. The received signal represents symbols identified at least in part by corresponding symbol phase angles. The received signal is processed by a phase shifter 20 comprising a quadrature demodulator consisting of a quadrature hybrid 22 and mixers 24 and 26 which perform a multiplication function. Hybrid 20 generates a signal of the form cos(ω_{c}t+Ô) at an output 16 and sin(ω_{c}t+Ô) at an output 18 where Ô is the reference phase estimate. The outputs of mixers 24 and 26 are phase shifted and demodulated I and Q signals defining a corrected phase angle. The I and Q signals are filtered by low pass detection filters 28 and 30 which are matched to the spectrum of the received signal on input 10. The phase shifted signals are then converted to digital form in analog to digital converters 32 and 34 connected as shown. The outputs of converters 32 and 34 are transmitted to Viterbi decoders 36 and 38. The outputs of the decoders correspond to the decoded symbols represented by the received signal on input 10. The outputs of decoders 36 and 38 are transmitted to convolutional encoders 40 and 42 connected as shown. The outputs of the encoders are transmitted over a two bit bus 44 to the input of a phase error look-up table 52. Additional inputs for the phase error look-up table are provided by the outputs of shift registers 46 and 48 over K bit busses.

The phase error look-up table is preferably implemented using a read only memory (ROM). ROM 52 generates a phase error signal having a value representing the difference between the corrected phase angle represented by the phase information in the signals output from shift registers 46 and 48 and the symbol phase angle represented by the symbol identified in the data on bus 44. The phase error signal generated by read only memory 52 is transmitted over an M +2 bit bus 54 to a digital to analog converter 56. The analog signal produced by converter 56 is filtered by a loop filter 58. The output of filter 58 controls the frequency of a sinusoidal signal generated by a voltage controlled oscillator 60 which provides an input to hybrid 22. Converter 56, filter 58 and voltage controlled oscillator 60 comprise a phase locked loop 62 which controls the operation of phase shifter 20. In response to the phase error signal processed by loop 62, hybrid 20 alters the T_{c} parameter of its outputs for a time to reduce the phase error of the corrected phase angle represented in the output of multipliers 24 and 26.

Those skilled in the art will recognize that the preferred embodiment may be modified without departing from the true spirit and scope of the invention as defined by the accompanying claims. For example, reference phase correction can be decoupled from the downversion process and implemented using digital processing of the sampled baseband data following analog-to-digital converters 32 and 34.

## Claims

1. Apparatus for reducing errors in the phase information of a received signal representing symbols identified at least in part by corresponding symbol phase angles, said apparatus comprising in combination:
a phase shifter arranged to shift said phase information of the received signal to form a phase shifted signal defining a corrected phase angle;
a decoder arranged to generate a decode signal identifying one of said symbols defining a predetermined symbol nominal phase angle in response to said phase shifted signal; and
a phase error look-up table responsive to said decode signal and said phase shifted signal to generate a phase error signal having a value related to the difference between the corrected phase angle represented by said phase information and said symbol nominal phase angle, said phase shifter being responsive to said phase error signal to alter said phase information of the received signal to reduce the phase error of said corrected phase angle.

2. Apparatus, as claimed in claim 1, wherein said decoder comprises a Viterbi decoder and a convolution encoder generating said decode signal.

3. Apparatus, as claimed in claim 1, wherein said phase shifter comprises:
a quadrature hybrid arranged to generate quadrature sinusoids at a frequency and phase derived from said phase error signal; and
a multiplier arranged to multiply the value of said received signal by said quadrature sinusoids.

4. Apparatus, as claimed in claim 1, wherein said phase error look-up table comprises a memory storing signals representing said phase error, said memory being addressed in response to said decode signal and said phase information.

5. Apparatus, as claimed in claim 1, and further comprising:
a first converter arranged to convert said phase shifted signal to a digital shifted signal; and
a second converter arranged to convert said phase error signal from a digital signal to an analog signal.

6. A method of reducing errors in the phase information of a received signal representing symbols identified at least in part by corresponding symbol phase angles, said method comprising in combination:
shifting said phase information of the received signal to form a phase shifted signal defining a corrected phase angle;
generating a decode signal identifying one of said symbols defining a predetermined symbol nominal phase angle in response to said shifted signal;
generating a phase error signal having a value related to the difference between the corrected phase angle represented by said phase information and said symbol nominal phase angle in response to said decode signal and at least said phase shifted signal; and
altering said phase information of the received signal to reduce the phase error of said corrected phase angle in response said phase error signal.

7. A method, as claimed in claim 6, wherein said decoding comprises Viterbi decoding and convolution encoding to generate said decode signal.

8. A method, as claimed in claim 6, wherein said phase shifting comprises:
generating quadrature sinusoids derived from said phase error signal; and
multiplying the value of said received signal by said quadrature sinusoids.

9. A method, as claimed in claim 6, wherein said generating comprises:
storing signals representing said phase error; and
addressing said stored signals in response to said decode signal and said phase information.

10. A method, as claimed in claim 6, and further comprising:
converting said phase shifted signal to a digital signal; and
converting said phase error signal from a digital signal to an analog signal.
